# EUROPÄISCHE PATENTSCHRIFT

(11) **EP 1 118 151 B1**
(45) Veröffentlichungstag und Bekanntmachung des Hinweises auf die Patenterteilung: **14.08.2002**
(21) Anmeldenummer: 99940076.5
(22) Anmeldetag: 29.07.1999
(51) Int. Cl.: H02M 5/45, H02J 3/38, H02J 3/36

(54) **ELEKTRISCHE ENERGIEÜBERTRAGUNGSANLAGE**
ELECTRICAL POWER TRANSMISSION SYSTEM
INSTALLATION DE TRANSPORT D'ENERGIE ELECTRIQUE

(30) Priorität: 05.10.1998 DE 19845903
(43) Veröffentlichungstag der Anmeldung: 25.07.2001
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: EP9905434
(87) Internationale Veröffentlichungsnummer: WO0021186

(56) Entgegenhaltungen:
- WO-A-97/17753
- WO-A-97/45908
- US-A- 5 055 989

## Beschreibung

Die Erfindung betrifft eine elektrische Energieübertragungsanlage zur Übertragung von elektrischer Energie von einem eine erste Wechselspannung erzeugenden Generator über eine Übertragungsleitung in ein elektrisches Wechselspannungsnetz, mit einer Schaltungsanordnung, die die vom Generator erzeugte erste Wechselspannung in eine erste Gleichspannung umwandelt und in die Übertragungsleitung einspeist, und mit einem ersten Wechselrichter, der am Ausgang der Übertragungsleitung angeschlossen ist und die erste Gleichspannung in eine zweite Wechselspannung umwandelt und in das Wechselspannungsnetz einspeist.

Stromerzeugungsanlagen wie elektrische Generatoren werden üblicherweise direkt an das öffentliche Versorgungsnetz angeschlossen. Dies gilt auch für Windenergieanlagen. Besteht jedoch eine größere Entfernung zu einem möglichen Anschlußpunkt an das öffentliche Versorgungsnetz, muß eine Übertragungsleitung vorgesehen werden. Wird dabei die vom Generator erzeugte Wechselspannung direkt in die Übertragungsleitung eingespeist, treten auf der Übertragungsleitung Blindleistungen und damit erhöhte Leistungsverluste sowie bei längeren Strecken Instabilitäten auf, weil die Impedanz einer solchen Wechselstromleitung aus Induktivität, Kapazität und realem Widerstand besteht. Ebenfalls erzeugt eine Wechselstromleitung ein elektromagnetisches Feld, das zu unerwünschten EMV-Problemen führen kann.

Aus WO 97/45908 ist ein Windenergiepark mit wenigstens zwei Windenergieanlagen und einer netzseitigen Stromrichterstation bekannt, wobei jede Windenergieanlage einen Generator, einen Gleichrichter, eine Glättungsdrossel und eine Einrichtung zur Leistungsregelung aufweist, wobei die netzseitige Stromrichterstation eine Glättungsdrossel, einen Wechselrichter, einen Anpasstransformator, einen Filter und eine Regelungsanordnung aufweist, wobei diese Windenergieanlagen gleichstromseitig elektrisch parallel geschaltet sind und wobei die netzseitige Stromrichterstation gleichstromseitig mit den gleichstromseitig parallel geschalteten Windenergieanlagen elektrisch in Reihe geschaltet ist. Dieses Dokument offenbart mithin ein Gleichstromkonzept für einen Windenergiepark.

Aus US-A-5,055,989 ist ein Wechselrichter bekannt, welcher einen dreiphasigen Wechselspanner in eine einphasige Wechselspannung konvertiert.

Aus WO 97/17753 ist eine Wechselspannung zu Gleichspannungsumwandlungseinrichtung bekannt, bei welcher eine dreiphasige Wechselspannung in eine Gleichspannung umgewandelt wird.

Um die zuvor aufgezeigten Nachteile zu vermeiden, wird die vom Generator erzeugte erste Wechselspannung in eine erste Gleichspannung umgewandelt, die dann in die Übertragungsleitung eingespeist wird. Am Ende der Übertragungsleitung wird die Gleichspannung in eine zweite Wechselspannung umgewandelt und in das öffentliche Versorgungsnetz eingespeist, bei dem es sich ja um ein Wechselspannungsnetz handelt. Dabei sollte zweckmäßigerweise die umgewandelte zweite Wechselspannung der des öffentlichen Versorgungsnetzes zumindest im wesentlichen entsprechen, um unerwünschte Ausgleichsströme und Oberschwingungen zu vermeiden. Bei diesem bekannten Hochspannungs-Gleichstrom-Übertragungssystem, abgekürzt bezeichnet als HGÜ-System, wird mit Hilfe von Gleichstromdrosseln ein Gleichstrom in die Übertragungsleitung eingeprägt, wobei sich die Gleichspannung in Abhängigkeit von der Steuerung der zugehörigen Gleich- und Wechselrichter entsprechend einstellt.

Mit Hilfe der Erfindung mit den Merkmalen nach Anspruch 1 wird nun eine elektrische Energieübertragungseinrichtung der eingangs genannten Art geschaffen, bei welcher die Schaltungsanordnung eine Stromrichterschaltung, die die vom Generator erzeugte erste Wechselspannung in eine zweite Wechselspannung umwandelt, einen ersten Transformator, der die zweite Wechselspannung in eine dritte Wechselspannung umwandelt, und einen ersten Gleichrichter, der die dritte Wechselspannung in die zweite Gleichspannung umwandelt, aufweist.

Die erfindungsgemäß ausgebildete Schaltungsanordnung gestattet auf einfache Weise insbesondere die Erzeugung von in die Übertragungsleitung einzuspeisenden hohen Gleichspannungen, wodurch die Übertragung von elektrischer Energie in einem breiten Leistungsbereich auf der Übertragungsleitung möglich ist.

Bei der erfindungsgemäßen Anlage läßt sich bevorzugt die in die Übertragungsleitung eingespeiste hohe Gleichspannung als Basisgröße über den gesamten Leistungsbereich konstant halten, während sich der Strom linear als Funktion der zu übertragenden Leistung entsprechend ändert, wozu die Stromrichterschaltung und/oder der erste Gleichrichter die von ihm erzeugte und in die Übertragungsleitung gespeiste erste Gleichspannung auf einen konstanten Wert regelt. Dadurch entfallen die bei der bekannten Hochspannungs-Gleichstrom-Übertragung erforderlichen Gleichstromdrosseln.

Vorzugsweise ist die Frequenz der zweiten Wechselspannung höher als die der ersten Wechselspannung und sollte insbesondere in einem Bereich von etwa 500 bis 20.000 Hz liegen, so daß der erfindungsgemäß vorgesehene Transformator die Funktion eines sogenannten Mittelfrequenztransformators übernimmt.

Die Stromrichterschaltung kann die erste Wechselspannung, bei der es sich gewöhnlich um eine Drehspannung, also eine dreiphasige Wechselspannung, handelt, auch in eine einphasige dritte Wechselspannung umwandeln, wodurch derapparative Aufwand reduziert wird.

Eine gegenwärtig besonders bevorzugte Ausführung zeichnet sich dadurch aus, daß die Stromrichterschaltung einen zweiten Gleichrichter, der die vom Generator erzeugte erste Wechselspannung in eine zweite Gleichspannung umwandelt, und einen zweiten Wechselrichter, der die vom zweiten Gleichrichter erzeugte zweite Gleichspannung in die dritte Wechselspannung umwandelt, aufweist. Durch die Einfügung eines solchen Gleichspannungszwischenkreises ist es möglich, den nachgeschalteten zweiten Wechselrichter mit einer beliebigen Anzahl von Phasen und insbesondere auch als einphasiger Wechselrichter auszuführen. Ferner bietet ein solcher Gleichspannungszwischenkreis auf einfache Weise die Möglichkeit, den Betrag der Eingangsspannung am zweiten Wechselrichter im wesentlichen konstant zu halten, wozu zweckmäßigerweise ein Hochsetzsteller im Gleichspannungszwischenkreis vorgesehen ist. Die vom zweiten Gleichrichter erzeugte zweite Gleichspannung ist nämlich gewöhnlich grob linear von der Generatordrehzahl abhängig und somit entsprechend variabel, so daß diese vom Hochsetzsteller in eine im wesentlichen konstante Gleichspannung umgeformt wird. Außerdem sollte die vom ersten Gleichrichter aus der vierten Wechselspannung erzeugte und in die Übertragungsleitung eingespeiste erste Gleichspannung in der Regel höher als die zweite Gleichspannung des Gieichspannungs-Zwischenkreises sein.

Üblicherweise wandelt der erste Gleichrichter die vierte Wechselspannung in eine erste Gleichspannung um, die im Bereich von etwa 10 bis 500 kV liegt.

Der erste Transformator wandelt die dritte Wechselspannung vorzugsweise in eine vierte Wechselspannung mit einer höheren Amplitude als die der dritten Wechselspannung um, um die gewünschte Erzeugung der in die Übertragungsleitung einzuspeisenden hohen Gleichspannung zu realisieren.

Zwischen der Stromrichterschaltung und dem ersten Transformator sollte bevorzugt ein Filter geschaltet sein, der zweckmäßigerweise mindestens eine in Reihe geschaltete Induktivität und mindestens einen parallel geschalteten Kondensator aufweist, um unerwünschte Oberschwingungen im wesentlichen zu eliminieren.

Zur Glättung der Gleichspannungen sollte zwischen dem ersten Gleichrichter und der Übertragungsleitung und/oder zwischen der Übertragungsleitung und dem ersten Wechselrichter mindestens ein Kondensator gegen Masse geschaltet sein.

Im Hinblick auf die von der Übertragungsleitung eingespeiste hohe Gleichspannung müssen die Hochspannungsschalter des ersten Wechselrichters am Einspeiseort eine entsprechend hohe Spannungsfestigkeit aushalten. Um die Spannungsfestigkeit an den Hochspannungsschaltern zu reduzieren, wird daher vorgeschlagen, vorzugsweise den ersten Wechselrichter aus mehreren in Reihe geschalteten Teilwechselrichtern auszubilden. Bei einer Weiterbildung dieser Ausführung ist der erste Wechselrichter aus mehreren in Reihe geschalteten Teilwechselrichtern gerader Anzahl gebildet und liegt der Verbindungspunkt zwischen der ersten halben Anzahl und der zweiten halben Anzahl von Teilwechselrichtern auf Erdpotential.

Zur galvanischen Trennung und zur Spannungsanpassung der Energieübertragungsanlage gegenüber dem Wechselspannungsnetz bzw. öffentlichen Versorgungsnetz kann der erste Wechselrichter über einen zweiten Tranformator an das Wechselspannungsnetz angeschlossen sein. Für den Fall, daß der erste Wechselrichter aus mehreren Teilwechselrichtern in der zuvor beschriebenen Weise besteht, weist der zweite Tranformator mehrere induktiv in Reihe gekoppelte Primärwicklungsanordnungen entsprechend der Anzahl derTeilwechselrichter und eine gemeinsame Sekundärwicklungsanordnung auf, wobei jeweils eine Primärwicklungsanordnung an einen Teilwechselrichter angeschlossen ist, so daß der zweite Transformator die Addition der einzelnen Leistungen der Teilwechselrichter übernimmt.

Weitere bevorzugte Ausführungen der Erfindung sind in den Unteransprüchen gekennzeichnet.

Die zuvor beschriebene erfindungsgemäße Energieübertragungsanlage eignet sich insbesondere zum Anschluß von Windenergieanlagen an das öffentliche Versorgungsnetz, wenn größere Entfernungen vom jeweiligen Windpark zu einem möglichen Anschlußpunkt zu überbrücken sind.

Nachfolgend werden bevorzugte Ausführungsbeispiele der Erfindung anhand der beliegenden Zeichnungen näher erläutert. Es zeigen:
- Figur 1: schematisch im Blockschaltbild die gesamte elektrische Energieübertragungsanlage mit eingangsseitig daran angeschlossener Windenergieanlage und ausgangsseitig am geschlossenen öffentlichen Versorgungsnetz;
- Figur 2: ein detaillierteres Schaltbild der Anordnung aus erstem Gleichrichter, an dessen Eingang der elektrische Generator der Windenergieanlage angeschlossen ist, Gleichspannungszwischenkreis, erstem Wechselrichter, Filter, Mittelfrequenztransformator und zweitem Gleichrichter, an dessen Ausgang die Übertragungsleitung angeschlossen ist;
- Figur 3: ein detaillierteres Schaltbild der Anordnung aus zweitem Wechselrichter in einer ersten Ausführung, an dessen Eingang die Übertragungsleitung angeschlossen ist, und Ausgangstranformator, dessen Sekundärwicklungen am dreiphasigen öffentlichen Versorgungsnetz angeschlossen sind; und
- Figur 4a und b: das Schaltbild von Figur 3 mit einem modifizierten zweiten Wechselrichter in einer zweiten Ausführung (Figur 4a) und einer dritten Ausführung (Figur 4b).

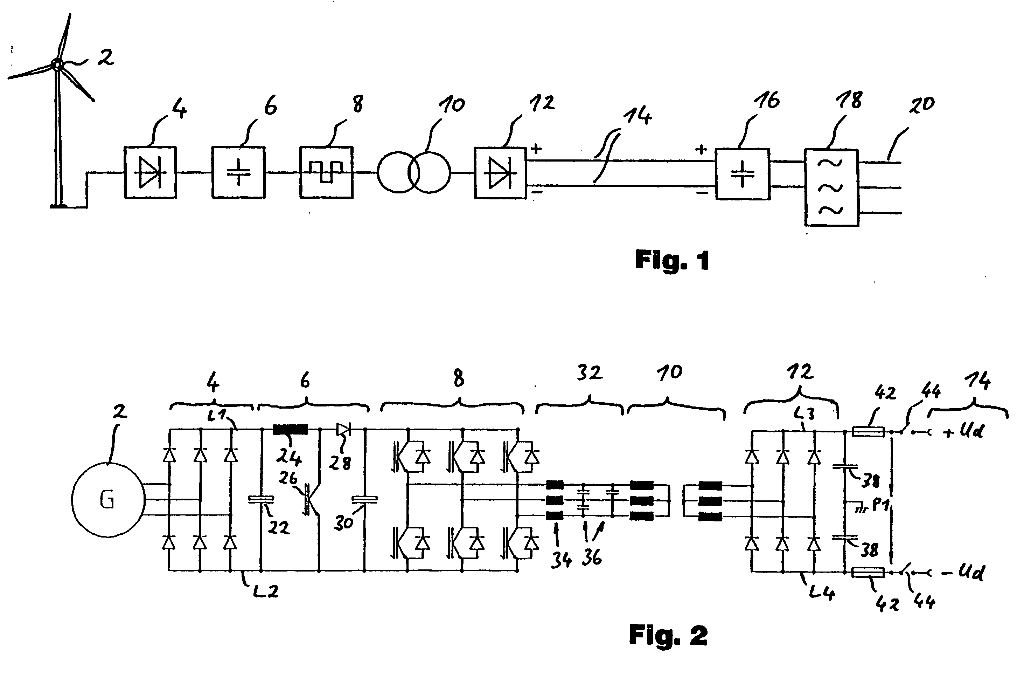

Im nachfolgend beschriebenen Ausführungsbeispiel ist der elektrische Generator, dessen erzeugte Energie mit Hilfe einer Übertragungsleitung 14 über größere Entfernungen in ein öffentliches Versorgungsnetz 20 eingespeist werden soll, Teil einer Windenergieanlage, wie in Figur 1 schematisch zu erkennen ist. Gleichwohl sei an dieser Stelle angemerkt, daß die Art des Antriebes des elektrischen Generators 2 grundsätzlich keinen Einfluß auf die Funktionsweise der nachfolgend beschriebenen Schaltung hat und der elektrische Generator 2 alternativ beispielsweise auch durch Wasserkraft oder Verbrennen von fossilen Werkstoffen angetrieben werden kann.

Wie Figur 1 erkennen läßt, ist der elektrische Generator 2 der Windenergieanlage an eine Stromrichterschaltung angeschlossen, die einen ersten Gleichrichter 4, einen Gleichrichterzwischenkreis 6 und einen ersten Wechselrichter 8 aufweist. Ein Mittelfrequenztransformator 10 istzwischen dem Ausgang des ersten Wechselrichters 8 und dem Eingang eines zweiten Gleichrichters 12 geschaltet. Am Ausgang des zweiten Gleichrichters 12 ist die Übertragungsleitung 14 angeschlossen, auf der die vom zweiten Gleichrichter 12 erzeugte Gleichspannung über eine größere Entfernung übertragen wird. Die Übertragungsleitung 14 ist an einen Filter 16 angeschlossen, dem ein zweiter Wechselrichter 18 nachgeschaltet wird, der mit seinem Ausgang am öffentlichen Versorgungsnetz 20 angeschlossen ist. Bei dem öffentlichen Versorgungsnetz 20 handelt es sich um ein gewöhnliches Drehstromnetz mit der üblichen Frequenz von 50 Hz oder 60 Hz.

Der elektrische Generator 2 der Windenergieanlage gemäß Figur 1 erzeugt eine drei- oder sechsphasige Wechselspannung und speist diese in den ersten Gleichrichter 4 ein, der die dreiphasige Wechselspannung in eine Gleichspannung umformt. Beim ersten Gleichrichter 4 handelt es sich um einen gewöhnlichen dreioder sechsphasigen Vollwellengleichrichter, der die positive Halbwelle jeder Phase in eine positive Teilgleichspannung auf dem positiven "Ast" L1 und die negative Halbwelle jeder Phase in eine negative Teilgleichspannung auf dem negativen "Ast" L2 umwandelt (siehe Figur 2). An dieser Stelle sei angemerkt, daß der elektrische Generator 2 natürlich alternativ auch beispielsweise eine einphasige Wechselspannung erzeugen kann, wozu dann der erste Gleichrichter als einphasiger Gleichrichter ausgebildet sein muß.

Die vom ersten Gleichrichter 4 erzeugte Gleichspannung liegt am Gleichspannungszwischenkreis 6 an, an dessen Eingang ein zwischen positivem Ast L1 und negativem Ast L2 geschalteter erster Kondensator 22 vorgesehen ist. Da die vom ersten Gleichrichter 4 erzeugte Gleichspannung grob linear von der Drehzahl des elektrischen Generators 2 abhängt, enthält der Gleichspannungszwischenkreis 6 einen Hochsetzsteller, der diese variable Gleichspannung in eine konstante Gleichspannung umformt (siehe Figur 2). Dieser Hochsetzsteller weist eine erste Induktivität 24, einen an deren Ausgang angeschlossenen und zwischen positivem Ast L1 und negativem Ast L2 parallel geschalteten IGBT (Insulated Gate Bipolar Transistor) 26, eine ebenfalls am Ausgang der Induktivität 24 angeschlossene und im positiven Ast L1 in Reihe geschaltete Diode 28 und am Ausgang einen zwischen positivem Ast L1 und negativem Ast L2 geschalteten zweiten Kondensator 30 zur Glättung der Gleichspannung auf.

Am Ausgang des Gleichspannungszwischenkreises 6 ist in der in Figur 2 dargestellten Ausführung ein dreiphasiger erster Wechselrichter 8 angeschlossen, der die Gleichspannung wieder in eine dreiphasige Wechselspannung umwandelt, und zwar mit einer Frequenz von etwa 500 bis 20.000 Hz. Dem ersten Wechselrichter 8 nachgeschaltet ist ein Filter 32, bestehend aus in Reihe geschalteten Induktivitäten 34 und parallel geschalteten Kondensatoren 36. An den Filter 32 ist der Mittelfrequenztransformator 10 angeschlossen. Da die vom ersten Wechselrichter 8 erzeugte Wechselspannung dreiphasig ist, handelt es sich bei dem Mittelfrequenztransformator 10 zwangsläufig um einen Drehstromtransformator. In dem in Figur 2 dargestellten Ausführungsbeispiel sind die Primär- und Sekundärwicklungen des Mittelfrequenztransformators 10 jeweils im Stern geschaltet. Alternativ ist es aber natürlich auch denkbar, die Wicklungen im Dreick zu schalten.

Der Mittelfrequenztransformator 10 sorgt nicht nur für eine Potentialtrennung, sondern auch für eine hohe Spannungsübersetzung, beispielsweise von 400 V pro Phase auf der Primärseite auf 70 kV pro Phase auf der Sekundärseite.

Anschließend formt der zweite Gleichrichter 12 die vom Mittelfrequenztransformator 10 hochtransformierte dreiphasige Wechselspannung in eine hohe Gleichspannung um. Wegen der dreiphasigen Eingangswechselspannung ist der zweite Gleichrichter 12, bei dem es sich um einen Vollwellen-Hochspannungsgleichrichter handelt, als dreiphasiger Gleichrichter ausgebildet, wobei ähnlich wie beim ersten Gleichrichter 4 die positive Halbwelle jeder Phase in eine positive hohe Teilgleichspannung + Ud auf dem positiven Ast L3 und die negative Halbwelle jeder Phase in eine negative hohe Teilgleichspannung -Ud auf dem negativen Ast L3 umgeformt wird, jeweils bezogen auf den Punkt P1 gemäß Figur 2, der im dargestellten Ausführungsbeispiel symmetrisch zwischen den beiden Ästen L3 und L4 auf Erdpotential liegt, so daß die Spannungsdifferenz zwischen den beiden Ästen L3 und L4 2Ud beträgt.

Zur Glättung der vom zweiten Gleichrichter 12 erzeugten hohen Gleichspannung ist zwischen den beiden Ästen L3 und L4 eine Kapazität geschaltet, die beim in Figur 2 dargestellten Ausführungsbeispiel aus zwei in Reihe geschalteten Kondensatoren 38 besteht, deren Verbindungspunkt P1 auf Erdpotential liegt. Um den gleichen Betrag der Spannungsdifferenz zwischen dem positiven Ast L3 und dem Verbindungspunkt P1 einerseits und zwischen dem Verbindungspunkt P1 und dem negativen Ast L4 andererseits herzustellen, sollten beide Kondensatoren 38 die gleichen Impedanzwerte aufweisen.

An dieser Stelle sei angemerkt, daß der erste Wechselrichter 8, der Filter 32, der Mittelfrequenztransformator 10 und der zweiten Gleichrichter 12 alternativ beispielsweise auch einphasig ausgeführt sein können.

Der positive Ast L3 und der negative Ast L4 sind im dargestellten Ausführungsbeispiel gemäß Figur 2 jeweils über eine Sicherung 42 und einen Trennschalter 44 mit der zugehörigen Ader der zwei Adern aufweisenden Übertragungsleitung 14 verbunden.

Mit Hilfe des Mittelfrequenztransformators 10 und des anschließenden zweiten Gleichrichters 12 kann somit eine hohe Gleichspannung vorzugsweise im Bereich von etwa 10 bis 500 kV erzeugt werden, die dann in die Übertragungsleitung 14 eingespeist wird.

Die so in die Übertragungsleitung 14 eingespeiste hohe Gleichspannung dient als Basisgröße und wird über den gesamten Leistungsbereich konstant gehalten, während sich der durch die Übertragungsleitung 14 fließende Strom linear als Funktion der zu übertragenden Leistung entsprechend ändert. Die Konstanthaltung der auf der Übertragungsleitung 14 angelegten hohen Gleichspannung findet durch eine entsprechende Regelung des im Gleichspannungszwischenkreis 6 enthaltenen Hochsetzstellers, des ersten Wechselrichters 8 und/oder des zweiten Gleichrichters 12 statt.

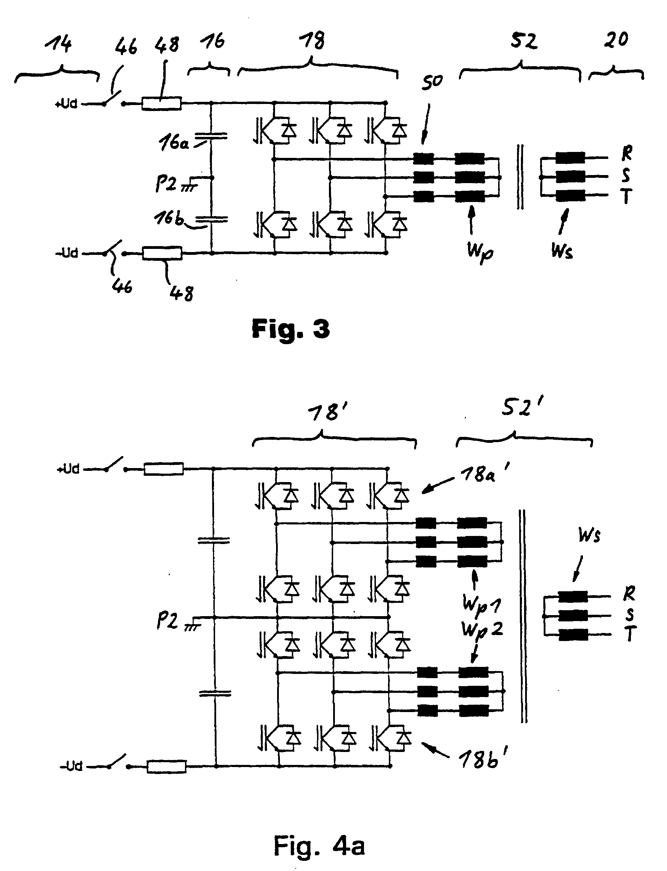

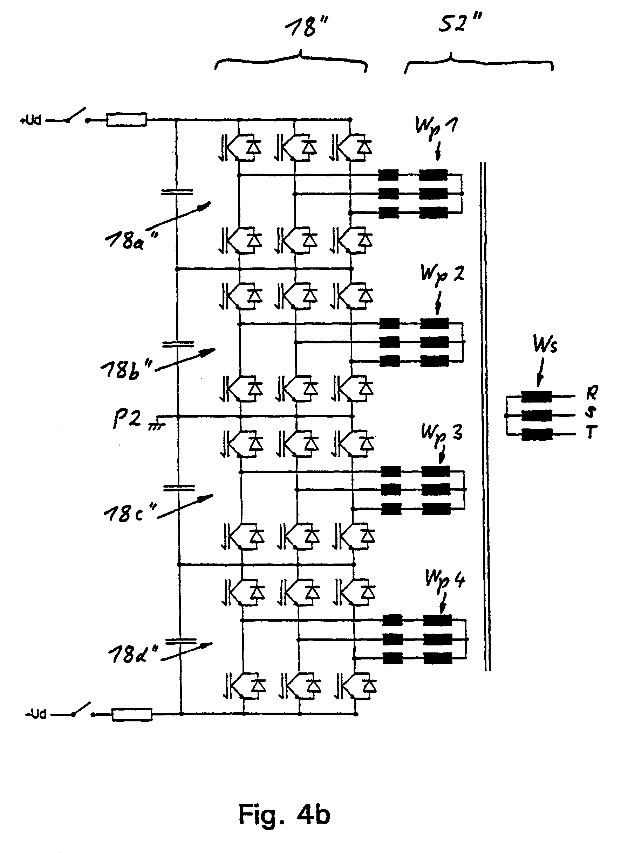

Während Figur 2 die am Erzeugungsort installierte Schaltung der Energieübertragungsanlage zeigt, ist in den Figuren 3 und 4 die am Einspeiseort installierte Schaltung dargestellt.

Bei der in Figur 3 gezeigten Ausführung ist die Übertragungsleitung 14 über Trennschalter 46 und Sicherungen 48 an den Filter 16 und den nachfolgenden zweiten Wechselrichter 18 angeschlossen.

Der Filter 16 dient ebenfalls zur Glättung der auf der Übertragungsleitung 14 übertragenen hohen Gleichspannung und besteht im dargestellten Ausführungsbeispiel aus zwei Kondensatoren 16a, 16b, die ähnlich wie die Kondensatoren 38 jeweils die gleiche Impedanz besitzen und zueinander in Reihe sowie gemeinsam zwischen den positiven und negativen Ästen parallel geschaltet sind, wobei der Verbindungspunkt P2 auf Erdpotential liegt.

Beim zweiten Wechselrichter 18 handelt es sich um einen gewöhnlichen dreiphasigen Wechselrichter, der im Prinzip ähnlich wie der erste Wechselrichter 8 aufgebaut ist.

Am Ausgang des zweiten Wechselrichters 18 ist ein weiterer Filter 50 angeschlossen, das in jede Phase geschaltete Induktivitäten zur Glättung des Stromes aufweist.

Die vom zweiten Wechselrichter 18 aus der hohen Gleichspannung erzeugte Wechselspannung wird über den Filter 50 und einen daran angeschlossenen Ausgangstransformator 52 in das dreiphasige öffentliche Versorgungsnetz 20 gespeist. Dementsprechend ist der Ausgangstransformator 52 ebenfalls dreiphasig ausgeführt, wobei in der Darstellung gemäß Figur 3 sowohl die Primärwicklungen Wp als auch die Sekundärwicklungen Ws jeweils im Stern geschaltet sind. Selbstverständlich ist es auch denkbar, die Wicklungen des Ausgangstransformators 52 im Dreieck zu schalten. Der Ausgangstransformator 52 dient zur Potentialtrennung.

Eine weitere Aufgabe des Ausgangstransformators 52 kann darin bestehen, die vom zweiten Wechselrichter 18 erzeugte Wechselspannung auf einen Effektivwert zu transformieren, der dem der Wechselspannung des Versorgungsnetzes 20 entspricht.

Im Hinblick auf die von der Übertragungsleitung eingespeiste hohe Gleichspannung müssen die Hochspannungsschalter des zweiten Wechselrichters 18 eine entsprechend hohe Spannungsfestigkeit aufweisen.

Da für das Übertragungskabel 14 die Spannungsfestigkeit gegen das Erdpotential maßgeblich den Preis und die technische Machbarkeit bestimmt, sollte dieser Wert genau definiert werden. Aus diesem Grunde erscheinen Spannungswerte von + Ud = + 50 kV und -Ud = - 50 kV gegen das Erdpotential geeignet.

Um die Spannungsfestigkeit an den Hochspannungsschaltern zu halbieren, wird alternativ ein Wechselrichterkonzept gemäß Figur 4a vorgeschlagen. Dieses Konzept sieht einen Wechelrichter 18' mit zwei Teilwechselrichtern 18a'und 18b' in Reihenschaltung vor, wobei der Verbindungspunkt zwischen den beiden Teilwechselrichtern 18a' und 18b' mit dem Verbindungspunkt P2 zusammengeschaltet ist und somit auf Erdpotential liegt. Dadurch brauchen die Teilwechselrichter 18a' und 18b' jeweils nur die Hälfte der Spannungsfestigkeit des in Figur 3 gezeigten (einzigen) Wechselrichters 18 aufzuweisen. Die beiden Teilspannungen + Ud und -Ud werden durch die Ausgangsströme der Teilwechselrichter 18a' und 18b' geregelt; ist beispielsweise die positive Teilgleichspannung + Ud zu hoch, wird der Ausgangsstrom des zugehörigen Teilwechselrichters 18a' entsprechend höher geregelt und umgekehrt. Die von den beiden Teilwechselrichtern 18a' und 18b' erzeugten Teilwechselspannungen werden durch den Ausgangstransformator 52' primärseitig addiert, indem der Ausgang des ersten Teilwechselrichters 18a' an erste Primärwicklungen Wp1 und der Ausgang des zweiten Teilwechselrichters 18b' an zweite Primärwicklungen Wp2 angeschlossen und die ersten und zweiten Primärwicklungen Wp1 und Wp2 miteinander induktiv in Reihe gekoppelt sind.

Figur 4b zeigt eine weitere Ausführung eines Wechselrichters 18", bei welcher vier Teilwechselrichter 18a', 18b', 18c' und 18d' in Reihe geschaltet sind, wobei der Verbindungspunkt zwischen zweitem Teilwechselrichter 18b" und drittem Teilwechselrichter 18c" mit dem Verbindungspunkt P2 verbunden ist und auf Erdpotential liegt. Auf diese Weise kann die Spannungsfestigkeit für jeden Teilwechselrichter noch einmal um die Hälfte gegenüber der Ausführung von Figur 4a und somit auf ein Viertel gegenüber der Ausführung von Figur 3 reduziert werden. Dementsprechend weist der Ausgangstranformator 52" dieser Ausführung vier induktiv in Reihe miteinander gekoppelte Primärwicklungen Wp1, Wp2, Wp3 und Wp4 auf, die entsprechend an die Ausgänge der Teilwechselrichter angeschlossen sind. Das in Figur 4b gezeigte Wechselrichterkonzept funktioniert in gleicher Weise wie das in Figur 4a gezeigte Konzept.

## Patentansprüche

1. Einrichtung zur Übertragung von elektrischer Energie von einem eine erste Wechselrichterspannung erzeugenden Generator (2) über eine Gleichstromübertragungsleitung (14) in ein elektrisches Wechselspannungsnetz (20) mit einer Schaltungsanordnung bestehend aus einem ersten Gleichrichter (4)
**dadurch gekennzeichnet, dass** dem ersten Gleichrichter ein Hochsetzsteller (6, 24, 26, 28, 30) nachgeschaltet ist und dem Hochsetzsteller ein erster Wechselrichter (8) nachgeschaltet ist, dass der erste Gleichrichter (4) die vom Generator (2) erzeugte erste Wechselspannung in eine erste Gleichspannung umwandelt, der Hochsetzsteller (6, 24, 26, 28, 30) die erste Gleichspannung in eine konstante Gleichspannung umformt und der erste Wechselrichter (8) die vom Hochsetzsteller zur Verfügung gestellte konstante Gleichspannung in eine zweite Wechselspannung umwandelt.

2. Einrichtung nach Anspruch 1,
**dadurch gekennzeichnet, dass** die von dem ersten Wechselrichter (8) zur Verfügung gestellte zweite Wechselspannung mittels eines ersten Transformators (10) in eine dritte Wechselspannung umgewandelt wird und dem ersten Transformator (10) ein zweiter Gleichrichter (12) nachgeschaltet ist, der die dritte Wechselspannung in eine zweite Gleichspannung umwandelt, die in die Gleichstromübertragungsleitung (14) eingespeist wird und der zweite Gleichrichter (12) die in die Übertragungsleitung (14) eingespeiste Gleichspannung auf einen konstanten Wertregelt, so dass sich der in der Übertragungsleitung (14) gespeiste Strom als Funktion der Übertragung elektrischen Leistung ändert.

3. Einrichtung nach Anspruch 1 bis 2,
**dadurch gekennzeichnet, dass** die zweite Wechselspannung eine Frequenz aufweist, die höher ist als die Frequenz der ersten Wechselspannung.

4. Einrichtung nach einem der Ansprüche 1 bis 3,
**dadurch gekennzeichnet, dass** die Frequenz der zweiten Wechselspannung im Bereich von etwa 500 bis 20.000Hz. liegt.

5. Einrichtung nach einem der Ansprüche 1 bis 4,
**dadurch gekennzeichnet, dass** die Schaltungsanordnung, bestehend aus dem ersten Gleichrichter (4) dem Hochsitzsteller (6, 24 ,26 ,28 ,30) und dem ersten Wechselrichter die erste Wechselspannung in eine einphasige zweite Wechselspannung umwandelt.

6. Einrichtung nach mindestens einem der Ansprüche 1 bis 5,
**dadurch gekennzeichnet, dass** der erste Wechselrichter (8) ein einphasiger Wechselrichter ist.

7. Einrichtung nach einem der vorherigen Ansprüche,
**dadurch gekennzeichnet, dass** der zweite Gleichrichter (12) die dritte Wechselspannung in eine zweite Gleichspannung umwandelt die höher ist als die erste Gleichspannung.

8. Einrichtung nach einem der vorherigen Ansprüche,
**dadurch gekennzeichnet, dass** der zweite Gleichrichter (12) die dritte Wechselspannung in eine zweite Gleichspannung umwandelt, die im Bereich von etwa 10 - 500 kV liegt.

9. Einrichtung nach einem der vorherigen Ansprüche,
**dadurch gekennzeichnet, dass** der erste Transformator die zweite Wechselspannung in eine dritte Wechselspannung mit höherer Amplitude als die der zweiten Wechselspannung umwandelt.

10. Einrichtung nach einem der vorherigen Ansprüche,
**dadurch gekennzeichnet, dass** zwischen dem ersten Wechselrichter (8) und dem ersten Transformator (10) ein Filter (32) geschaltet ist.

11. Einrichtung nach Anspruch 10,
**dadurch gekennzeichnet, dass** der Filter (32) mindestens eine in Reihe geschaltete Induktivität (34) und mindestens ein parallel geschalteten Kondensator (36) aufweist.

12. Einrichtung nach einem der vorherigen Ansprüche,
**dadurch gekennzeichnet, dass** zwischen dem zweiten Gleichrichter (12) und der Übertragungsleitung (14) und/oder zwischen der Übertragungsleitung (14) und einen der Übertragungsleitung (14) nachgestalteten zweiten Wechselrichter (18) mindestens einen Kondensator (38, 16a, 16b) gegen Masse geschaltet ist.

13. Einrichtung nach einem der vorherigen Ansprüche,
**dadurch gekennzeichnet, dass** der zweite Wechselrichter (18'; 18") aus mehreren in Reihe geschalteten Teilwechselrichtem (18a', 18b'; 18a", 18b" 18c" 18d") gebildet ist.

14. Einrichtung nach Anspruch 13,
**dadurch gekennzeichnet, dass** der zweite Wechselrichter (18', 18") aus mehreren in Reihe geschalteten Teilwechselrichtem (18a', 18b', 18a", 18b", 18c", 18d") gerader Anzahl gebildet ist und ein Verbindungspunkt zwischen der ersten halben Anzahl (18a', 18a", 18b"), und der zweiten halben Anzahl (18b', 18c", 18d") von Teilwechselrichtem auf Erdpotenzial M liegt.

15. Einrichtung nach einem der vorherigen Ansprüche,
**dadurch gekennzeichnet, dass** der zweite Wechselrichter (18', 18") über einen zweiten Erster Transformator (52', 52") an das Wechselspannungsnetz (20) angeschlossen ist.

16. Einrichtung nach Anspruch 15,
**dadurch gekennzeichnet, dass** der zweite Transformator (52'), (52") mehrere induktiv in Reihe gekoppelte Primärwicklungsanordnungen (Wp1, Wp2, Wp3, Wp4), entsprechend der Anzahl der Teilwechselrichter (18a',18b',18a", 18b", 18c", 18d") und eine gemeinsame Sekundärwicklungsanordnung (Ws) aufweist, wobei jeweils eine Primärwicklungsanordnung an einen Teilwechselrichter angeschlossen ist.

## Claims

1. A device for transmitting electrical energy from a generator (2) producing a first inverter voltage by way of a d.c. transmission line (14) to an electrical a.c. voltage network (20), having a circuit arrangement comprising a first rectifier (4), **characterised in that** a step-up converter (6, 24, 26, 28, 30) is connected downstream of the first rectifier and a first inverter (8) is connected downstream of the step-up converter, **in that** the first rectifier (4) converts the first a.c. voltage produced by the generator (2) into a first d.c. voltage, the step-up converter (6, 24, 26, 28, 30) converts the first d.c. voltage into a constant d.c. voltage, and the first inverter (8) converts the constant d.c. voltage provided by the step-up converter into a second a.c. voltage.

2. A device according to Claim 1, **characterised in that** the second a.c. voltage provided by the first inverter (8) is converted by means of a first transformer (10) into a third a.c. voltage, and connected downstream of the first transformer (10) is a second rectifier (12) which converts the third a.c. voltage into a second d.c. voltage which is fed to the d.c. transmission line (14) and the second rectifier (12) regulates the d.c. voltage fed to the transmission line (14) to give a constant value, so that the current fed to the transmission line (14) is modified as a function of the transmission of electrical power.

3. A device according to Claim 1 or 2, **characterised in that** the second a.c. voltage has a frequency which is higher than the frequency of the first a.c. voltage.

4. A device according to one of Claims 1 to 3, **characterised in that** the frequency of the second a.c. voltage is in the range from approximately 500 to 20,000 Hz.

5. A device according to one of Claims 1 to 4, **characterised in that** the circuit arrangement comprising the first rectifier (4), the step-up converter (6, 24, 26, 28, 30) and the first inverter converts the first a.c. voltage into a single-phase second a.c. voltage.

6. A device according to at least one of Claims 1 to 5, **characterised in that** the first inverter (8) is a single-phase inverter.

7. A device according to one of the preceding claims, **characterised in that** the second rectifier (12) converts the third a.c. voltage into a second d.c. voltage which is larger than the first d.c. voltage.

8. A device according to one of the preceding claims, **characterised in that** the second rectifier (12) converts the third a.c. voltage into a second d.c. voltage which is in the range from approximately 10 - 500 kV.

9. A device according to one of the preceding claims, **characterised in that** the first transformer converts the a.c. voltage into a third a.c. voltage of greater amplitude than that of the second a.c. voltage.

10. A device according to one of the preceding claims, **characterised in that** a filter (32) is connected between the first inverter (8) and the first transformer (10).

11. A device according to Claim 10, **characterised in that** the filter (32) has at least one inductor (34) connected in series and at least one capacitor (36) connected in parallel.

12. A device according to one of the preceding claims, **characterised in that** between the second rectifier (12) and the transmission line (14) and/or between the transmission line (14) and a second inverter (18) connected downstream of the transmission line (14) there is at least one capacitor (38, 16a, 16b) connected to earth.

13. A device according to one of the preceding claims, **characterised in that** the second inverter (18'; 18") is formed from a plurality of part inverters (18a', 18b'; 18a", 18b", 18c", 18d") connected in series.

14. A device according to Claim 13, **characterised in that** the second inverter (18', 18") is formed from a plurality of part inverters (18a', 18b', 18a", 18b", 18c", 18d"), connected in series and even in number, and a connection point between the first half (18a', 18a", 18b") and the second half (18b', 18c", 18d") of the part inverters is connected to earth potential M.

15. A device according to one of the preceding claims, **characterised in that** the second inverter (18', 18") is connected by way of a second "first" transformer (52', 52") to the a.c. voltage network (20).

16. A device according to Claim 15, **characterised in that** the second transformer (52'), (52") has a plurality of primary winding arrangements (Wp1, Wp2, Wp3, Wp4), coupled inductively in series and corresponding to the number of the part inverters (18a', 18b', 18a", 18b", 18c", 18d"), and a common secondary winding arrangement (Ws), in each case one primary winding arrangement being connected to one part inverter.

## Revendications

1. Appareil pour le transport d'énergie électrique d'un générateur (2) fournissant une première tension d'onduleur au moyen d'une ligne de transport de courant continu (14) dans un réseau électrique de tension alternative (20) avec un agencement de circuit comprenant un premier redresseur (4)
**caractérisé en ce qu'**un actionneur (6, 24, 26, 28, 30) est monté en aval du premier redresseur et un premier onduleur (8) est monté en aval de l'actionneur, **en ce que** le premier redresseur (4) convertit la première tension alternative produite par le générateur (2) en une première tension continue, l'actionneur (6, 24, 26, 28, 30) convertit la première tension continue en une tension continue constante et le premier onduleur (8) convertit la tension continue constante fournie par l'actionneur en une seconde tension alternative.

2. Appareil selon la revendication 1,
**caractérisé en ce que** la seconde tension alternative fournie par le premier onduleur (8) est convertie au moyen d'un premier transformateur (10) en une troisième tension alternative et un second redresseur (12) est placé en aval du premier transformateur (10) et convertit la troisième tension alternative en une seconde tension continue, qui est envoyée dans la ligne de transport d'énergie à courant continu (14) et le second redresseur (12) régule la tension continue envoyée dans la ligne de transport d'énergie (14) en une valeur constante, de sorte que le courant envoyé dans la ligne de transport d'énergie (14) varie en fonction du transport de la puissance électrique.

3. Appareil selon les revendications 1 à 2,
**caractérisé en ce que** la seconde tension alternative présente une fréquence qui est supérieure à la fréquence de la première tension alternative.

4. Appareil selon l'une quelconque des revendications 1 à 3,
**caractérisé en ce que** la fréquence de la seconde tension alternative se situe dans la plage d'environ 500 jusqu'à 20.000 Hz.

5. Appareil selon l'une quelconque des revendications 1 à 4,
**caractérisé en ce que** l'agencement de circuit, comprenant le premier redresseur (4), l'actionneur (6, 24, 26, 28, 30) et le premier onduleur, convertit la première tension alternative en une seconde tension alternative monophasée.

6. Appareil selon au moins l'une quelconque des revendications 1 à 5,
**caractérisé en ce que** le premier onduleur (8) est un onduleur monophasé.

7. Appareil selon l'une quelconque des revendications précédentes,
**caractérisé en ce que** le second redresseur (12) convertit la troisième tension alternative en une seconde tension alternative qui est supérieure à la première tension continue.

8. Appareil selon l'une quelconque des revendications précédentes,
**caractérisé en ce que** le second redresseur (12) convertit la troisième tension alternative en une seconde tension continue qui se situe dans la plage d'environ 10 à 500 KV.

9. Appareil selon l'une quelconque des revendications précédentes,
**caractérisé en ce que** le premier transformateur convertit la seconde tension alternative en une troisième tension alternative avec une amplitude supérieure à celle de la seconde tension alternative.

10. Appareil selon l'une quelconque des revendications précédentes,
**caractérisé en ce qu'**un filtre (32) est branché entre le premier onduleur (8) et le premier transformateur (10).

11. Appareil selon la revendication 10,
**caractérisé en ce que** le filtre (32) présente au moins une inductance (34) branchée en série et au moins un condensateur (36) branché en parallèle.

12. Appareil selon l'une quelconque des revendications précédentes,
**caractérisé en ce qu'**au moins un condensateur (38, 16a, 16b) est branché par rapport à la masse entre le deuxième redresseur (12) et la ligne de transport d'énergie (14) et/ou entre la ligne de transport d'énergie (14) et un second onduleur (18) branché en aval de la ligne de transport d'énergie (14).

13. Appareil selon l'une quelconque des revendications précédentes,
**caractérisé en ce que** le second onduleur (18'; 18"") est constitué de plusieurs onduleurs partiels (18a', 18b'; 18a"", 18b" ", 18c" ", 18d" ") montés en série.

14. Appareil selon la revendication 13,
**caractérisé en ce que** le second onduleur (18', 18"") est constitué de plusieurs onduleurs partiels (18a', 18b', 18a"", 18b"", 18c"", 18d"") branchés en série en nombre pair et un point de liaison entre le premier demi-nombre (18a', 18a"", 18b"") et le second demi-nombre (18b', 18c', 18d') se situe sur le potentiel de terre M.

15. Appareil selon l'une quelconque des revendications précédentes,
**caractérisé en ce que** le second onduleur (18', 18"") est raccordé par un second transformateur (52', 52"") au réseau de tension alternative (20).

16. Appareil selon la revendication 15,
**caractérisé en ce que** le second transformateur (52'), (52" ") présente plusieurs agencements d'enroulement primaire (Wp1, Wp2, Wp3, Wp4) couplés en série par induction en fonction du nombre des onduleurs partiels (18a', 18b', 18a"", 18b"", 18c"", 18d"") et un agencement commun d'enroulement secondaire (Ws), sachant qu'à chaque fois un agencement d'enroulement primaire est raccordé à un onduleur partiel.
